(19) Europäisches Patentamt
European Patent Office
Office européen des brevets

(11) **EP 4 488 638 A1**

(12) **EUROPEAN PATENT APPLICATION**

(43) Date of publication:
**08.01.2025 Bulletin 2025/02**

(51) International Patent Classification (IPC):
***G01H 9/00*** *(2006.01)*  ***G02B 6/125*** *(2006.01)*

(21) Application number: **23184252.7**

(52) Cooperative Patent Classification (CPC):
**G01H 9/004;** G02B 6/125

(22) Date of filing: **07.07.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nederlandse Organisatie voor
toegepast-natuurwetenschappelijk Onderzoek
TNO
2595 DA 's-Gravenhage (NL)**

(72) Inventors:
• **Harmsma, Peter Johan**
  **2595 DA's-Gravenhage (NL)**
• **Quesson, Benoit André Jacques**
  **2595 DA's-Gravenhage (NL)**
• **Van Neer, Paul Louis Maria Joseph**
  **2595 DA's-Gravenhage (NL)**
• **Van Der Heiden, Maurits Sebastiaan**
  **2595 DA's-Gravenhage (NL)**
• **Altmann, Robert Karl**
  **2595 DA's-Gravenhage (NL)**

(74) Representative: **V.O.
P.O. Box 87930
2508 DH Den Haag (NL)**

(54) **ULTRASOUND TRANSDUCER**

(57)     The present relates to an on-chip opto-acoustic transducer element for converting an acoustic pressure wave into a modulation of a property of light and to an ultrasound receiver and imager assembly comprising said transducer element.

The transducer comprises a membrane (5); a waveguide layer structure (4) comprising a waveguide (1) having a first portion (1a), a second waveguide portion (1b), and coupler (8) disposed between the first and the second portions, wherein the first and the second portion are comprised in a first respective a second sublayer (4a,4b) of the waveguide layer structure, and wherein the coupler comprises end sections of the first and second portion (1a, 1b) that co-propagate with respect to each other forming an overlap thereby optically coupling the first and the second waveguide portions.

FIG 5A

FIG 5B

## Description

TECHNICAL FIELD AND BACKGROUND

The present disclosure relates to an on-chip opto-acoustic transducer element for converting an acoustic pressure wave into a modulation of a property of light. The present disclosure further relates to an ultrasound receiver and imager assembly comprising said transducer element.

Ultrasound receivers for medical imaging of soft tissue, e.g. (human) tissue such as organs are known from the art. The basic principle is that one or more acoustic source sends out an ultrasound signal into a sample, e.g. tissue. Ultrasound receivers are used to detect an output signal in the form of amplitude and/or phase, usually in a linear/curved/phased array for example to construct a 2D image. Tomography allows the construction of a three-dimensional image of the tissue. Typically, multiple emitters and/or receivers are used, and advanced signal optimization and processing for optimum results.

Opto-acoustic receivers comprising a resonator supporting an optical wave guide for converting an acoustic pressure wave into a modulation of a property of light are known. The mechanical resonance frequency of the receiver is typically matched to the frequency of the ultrasound signal, so that mechanical amplification of the modulation can be obtained.

WO2022053712A1 discloses a Mach-Zehnder type interferometer sensor and measurement unit. The sensor comprises a spiraling waveguide that follows a cascading trajectory along multiple resonant membranes.

US11320303B2 relates to a ring-resonator based sensor structure for an acoustical pressure sensor and an opto-mechanical sensor and system that may be used for detecting acoustical pressure waves. Embodiments of a sensor structure for an acoustical pressure sensor are described that include a closed-loop optical waveguide resonator and a plurality of sensor elements.

WO2021145766A1 relates to a photonic integrated device that comprises a substrate, a plurality of mechanical resonator structures on a surface of the substrate, exposed to receive sound waves from outside the device; a plurality of sensing optical waveguides, each sensing optical waveguide at least partly mechanically coupled to at least one of the mechanical resonator structures, or a sensing optical waveguide that is at least partly mechanically coupled to all of the mechanical resonator structures.

While the known devices can provide some benefits there remains a desire for sensors having increased sensitivity and/or reduced dimensions. Reduced dimensions lead to higher mechanical resonance frequencies, and are therefore beneficial for ultrasound imaging at higher acoustic frequencies leading to improved spatial imaging resolution.

SUMMARY

Aspects of the present disclosure relate to an opto-acoustic transducer element that addresses the above desires. Aspects of the present disclosure further provide an opto-acoustic receiver comprising the transducer element as disclosed herein to an ultrasound imager assembly comprising the transducer element as disclosed herein. Advantageously, the opto-acoustic transducer element and/or the opto-acoustic receiver can be embodied as an on chip device, e.g. a fully integrated on-chip device.

The opto-acoustic transducer can be used to advantage for converting an acoustic pressure wave into a modulation of a property of light, e.g. for the detection of ultrasound and/or for the construction of an image, e.g. as in ultrasound imaging devices such as medical ultrasound imagers.

The opto-acoustic transducer comprises at least a carrier substrate having a membrane layer extending over an aperture in a surface of the substrate. The aperture may be fully etched through the substrate, or may be a recess. The membrane is configured to deflect in response to an acoustic pressure wave, typically an external acoustic pressure wave. The opto-acoustic transducer further comprises one or more waveguide layer structure(s) that is disposed at the membrane. The waveguide layer structure comprises at least one waveguide which provides a light path that extends between an input and an output of the transducer element. The waveguide is also referred to as the primary sensing waveguide. As discussed herein the waveguide is typically a so-called single mode waveguide. It will be appreciated that the concepts as disclosed herein can be applied to multimode waveguides, unless clear from context or stated to the contrary.

The waveguide can physically, or at least conceptually, be considered to comprise a configuration having a first waveguide portion, a second waveguide portion, and a waveguide coupler. The waveguide coupler is disposed between the first and the second waveguide portions and interconnects the portions to provide an extended light path. In this way the two waveguide portions can effectively be interpreted as a continuous elongated waveguide. For example, the waveguide can be embodied as a sensing arm of an interferometric measurement configuration, including but not limited to a so-called Mach-Zehnder interferometric configuration (MZI) or a Fabry-Perot-interferometer. Alternatively or additionally, the waveguide can be embodied as part of a ring resonator.

As will become clear from the description herein below the configuration as disclosed herein advantageously allows for increased sensitivity as compared to devices having a waveguide with a waveguide turn / S-shaped spiral for the same membrane. Additionally, the present disclosure can advantageously provide increased bandwidth and/or increased operating frequency. Without wishing to be bound by theory the increased sensitivity (for a given membrane) is believed to at least in part be related to a realization of a more efficient, more dense, spatial coverage of waveguide along the membrane. The present configuration, including one or more of the waveguide couplers as disclosed herein, can advantageously eliminate or at least mitigate zones along the membrane having a low areal density of waveguide (low spatial coverage). In particular the configuration as disclosed herein can advantageously eliminate an S-shaped waveguide section, such as represented by a central portion around the inflection point of a double arm Fermat's spiral, which disadvantageously takes up a comparatively large fraction of the membrane, due to restrictions as to allowable minimal radius or curvature .

As will be clear from the description hereinbelow the first and second waveguide portion can be provided in the same waveguide layer or in separate sublayers. For example, the first and second waveguide portion can be provided in separate sublayers of a vertical multilayer waveguide stack. Optionally, there can be a further sublayer between the sublayers, e.g. more waveguide layers or more cladding layers such as a polymer cladding layer. Providing the first and second waveguide portion in separate sublayers of a waveguide layer structure allows the respective waveguide portions to cross in different sublayers, at different vertical positions, without requiring a physical intersection between the waveguides. Avoiding physical intersection mitigates transfer losses along the waveguide.

Accordingly, in a preferred embodiment, there is provided an on-chip transducer element comprising: a membrane extending over an aperture in a surface of a carrier substrate; and a waveguide layer structure disposed at the membrane, the waveguide layer structure comprising a waveguide providing a light path extending between an input and an output, the waveguide comprising: a first waveguide portion; a second waveguide portion, and a waveguide coupler disposed between the first and the second waveguide portions, wherein the first waveguide portion is comprised in a first sublayer of the waveguide layer structure and the second waveguide portion is comprised in a second sublayer of the waveguide layer structure, and wherein the coupler is realized as what is also referred to herein as a vertical waveguide coupler. The vertical coupler is comprised of overlapping sections of the first and the second waveguide portions (typically end-sections), whereby the sections co-propagate with respect to each other forming an overlap in plan view thereby optically coupling the first and the second waveguide by a mechanism often referred to as 'adiabatic coupling', enabled by the interaction between the (evanescent parts) of the mode fields of the two waveguide layers.

In another or further preferred embodiment, the coupler can be realized as what is also referred to herein as a merged coupler, or a merged interconnect. In this case there is provided an on-chip opto-acoustic transducer element for converting an acoustic pressure wave into a modulation of a property of light, the transducer element comprising: a membrane extending over an aperture in a surface of the carrier substrate; and a waveguide layer structure disposed at the membrane, the waveguide layer structure comprising a waveguide providing a light path extending between an input and an output, the waveguide comprising: a first waveguide portion; a second waveguide portion, wherein the first waveguide portion continues into the second waveguide portion under an abrupt angle forming a merged interconnect. The interconnect terminates at a mirror element. The mirror couples both portions, e.g. reflects light between the respective portions. In a preferred variation, the mirror element can be an upstanding sidewall of the waveguide, whereby the sidewall and waveguide portions are arranged to reflect a propagating wave by total internal reflection.

In some embodiments, the on-chip opto-acoustic transducer element can comprise one or more of the vertical coupler or the merged waveguide coupler, or a combination thereof.

Typically, the first and the second waveguide portion each comprise a curved shape. For example, each can follow a curved trajectory along the membrane. The curved section(s) can have radius of curvature smaller than a radius of curvature of the membrane. In some embodiments, one or more of the first and/or the second waveguide portion can form a spiral. Curved, and particularly spiraling waveguides, can maximize a coverage of the waveguide trajectory along the membrane. The longer the waveguide trajectory along the membrane the more sensitive the transducer can be.

In some embodiments, the first waveguide portion provides a forward portion of the light path from the input towards the coupler, whereas the second waveguide portion provides a return portion of the light path from the coupler towards the output.

In some preferred embodiments, the first and the second waveguide portion form a respective first and a second spiral portion that respectively each spiral about the waveguide coupler. The coupler (vertical or merged) is preferably positioned at a central portion of the membrane.

In a preferred embodiment of the transducer element comprising a vertical coupler, the waveguide preferably further comprises a chirality inversion section, said chirality inversion section being disposed between the vertical waveguide coupler and one of the first and the second waveguide portion. The chirality inversion advantageously enables a double spiral configuration wherein the first and the second waveguide portion counter propagate about the chirality inversion section. As will be clear from the specification hereinbelow the two waveguide sections can advantageously propagate in separate waveguide layers with minimal or even without mutual crossings/overlaps, which minimizes attenuation and possible interference between propagating waves. In a preferred variation the chirality inversion section can be a so-called merged waveguide coupler.

In some embodiments, the waveguide layer comprises a plurality of: the first curved waveguide portion, the second curved waveguide portion, and the merged interconnect, wherein the first waveguide portion and the second waveguide portion have a radius of curvature larger than a radius of curvature of the membrane, and whereby individual ones of the plurality of merged interconnects are provided alternatingly across opposing ends of the cavity/recess to interconnect respective ones of the plurality of the first waveguide portion and the second waveguide portion in a zig-zag fashion. Zig-zagging the waveguide across the cavity/recess allows maximizing a length of the waveguide trajectory, in particular for membranes having a radius of curvature smaller than a minimum allowable bending radius of the waveguide.

In some preferred variations, the merged interconnect comprises at least two upstanding mirror elements that are combinedly configured to reflect light traveling along one of the first and the second light path portion to the other. Preferably the merged interconnect is a prism element.

Alternatively, or in addition, the first and the second waveguide portions can form a single waveguide portion. In this variation the merged interconnect can be realized as a multimode interference reflector, the multimode interference reflector comprising at least two upstanding mirror elements at a terminal end combinedly configured to reflect light back into the curved waveguide portion.

Especially, for variations wherein the coupler is realized as a merged interconnect, it is particularly preferred that the first and the second waveguide portion each comprise a section having a radius of curvature that progressively increases toward the coupler element, preferably ending at an essentially straight section at the merged interconnect. Reducing a curvature toward the merged interconnect smooths an optical wave propagation density profile across interconnected waveguide sections, mitigating destructive interference due to reflection at the mirror element.

In some embodiments, the transducer element as disclosed herein, further comprises one or more auxiliary waveguide structure. The auxiliary waveguide can include a reference waveguide (e.g. as in an interferometer configuration) or a coupling waveguide (e.g. as in a ring resonator configuration). The auxiliary waveguide, e.g. the reference waveguide can be provided outside the membrane layer.

In a preferred variation, the reference waveguide extends at least in part along a second side of the membrane opposite the first side across a natural bending plane of the membrane. Positioning the reference waveguide and the primary sensing waveguide on opposing sides of the membrane was found to further increase transducer sensitivity. The opposing configuration was found to provide an effectively doubled modulation of a property of light. For example, an effectively double observed phase shift due to a simultaneous positive contribution and negative contribution from the primary sensing waveguide and reference waveguide, respectively.

The present disclosure further provides an ultrasound receiver device comprising the on-chip photo acoustical transducer element as disclosed herein.

The ultrasound receiver device further comprises: one or more auxiliary components selected from a phase shifter, a directional coupler, a power divider, an auxiliary waveguide, and/or a reference waveguide; a light source operably configured for injecting light into the input, and readout circuitry including one or more light detector operably connected to the one or more light output and configured to provide as electrical signals an output based on a detected light intensity and/or phase shift. In a preferred embodiment, the ultrasound receiver device is an on-chip integrated ultrasound receiver device, wherein at least one, preferably all, of the auxiliary components, the light source, and the readout circuitry are integrated components provided on the same carrier substrate.

The present disclosure further provides an ultrasound imager assembly. The assembly comprises at least the on-chip transducer element as disclosed herein; an ultrasound transmitter, and a light source operably configured for injecting light into the input, and readout circuitry including: one or more light detector operably connected to the one or more output and configured to provide as electrical signals an output based on a detected light intensity and/or phase shift. In a preferred variation the assembly further includes a processing unit configured for storing the data and/or processing the output, e.g. for the reconstruction of an image.

BRIEF DESCRIPTION OF DRAWINGS

These and other features, aspects, and advantages of the apparatus, systems and methods of the present disclosure will become better understood from the following description, appended claims, and accompanying drawing wherein:

FIG 1 illustrates an ultrasound receiver concept;

FIGs 2A and 2B provide a top view image and a partial cross-section side view of an ultrasound imager assembly;

FIGs 3A and 3B provide schematic views of a transducer element;

FIG 4 provides schematic views of a transducer element

FIGs 5A, 5B and 5C provide schematic views of a transducer element including a vertical coupler;

FIGs 6A, 6B and 7 provide schematic views of transducer elements including a vertical coupler;

FIGs 8 provides a schematic view of a transducer element including a vertical coupler and chirality inversion section;

FIG 9 provides a schematic view of a transducer element including a vertical coupler and merged interconnect;

FIG 10 and 11 provide detail views of merged interconnects;

FIGs 12A and 12B illustrate aspects of transducer elements comprising a plurality of couplers

FIGs 13A, 13B, and 14 illustrate aspects of merged interconnects;

FIGs 15A, 15B, 15C, 15D, 15E, and 15F illustrate aspects of transducer elements; and

FIG 16A and 16B illustrate aspects of a double-sided transducer element.

DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

An objective of the present disclosure is to increase the receiver sensitivity per unit area. Increasing the sensitivity can advantageously improve the signal-to-noise ratio (SNR) and therefore increase the image quality produced by the sensor. Increasing the SNR will be useful for many instruments based on acoustic transducers. For example ultrasonic flow meter accuracy ultimately depends on the SNR (i.e. the sensitivity of the transducers). Similar GHz acoustic microscopy, e.g. for semicon applications, will benefit from improved SNR. Alternatively, or in addition, improved SNR can be relevant in view of medical regulations limiting the emitted acoustic energy of the acoustic emitter. Alternatively, or in addition, increasing sensitivity can advantageously compensate for attenuation of the ultrasound signals so that features can be imaged from a comparatively increased distance. Alternatively, or in addition, increased sensitivity can advantageously improve imaging resolution by enabling imaging at comparatively shorter acoustic wavelengths, where the ultrasound attenuation is generally higher.

At the same time increased sensitivity per unit area allows manufacturing of comparatively smaller receivers, which in turn enables miniaturization of receivers for a given signal to noise ratio. A small receiver can, for example, be fitted into catheters for in-vivo imaging.

The present disclosure pertains to opto-acoustic ultrasound receivers. In such receivers, a membrane is excited by the ultrasound signal. On or within the membrane are photonic waveguide-based devices provided such as ring resonators or interferometer devices such as Mach Zehnder Interferometers (MZIs). The optical wavelength response of the device is altered as the ultrasound signal deflects the membrane. The photonic device transmission is generally observed at one optical wavelength, and the transmitted optical power is representative for the ultrasound signal.

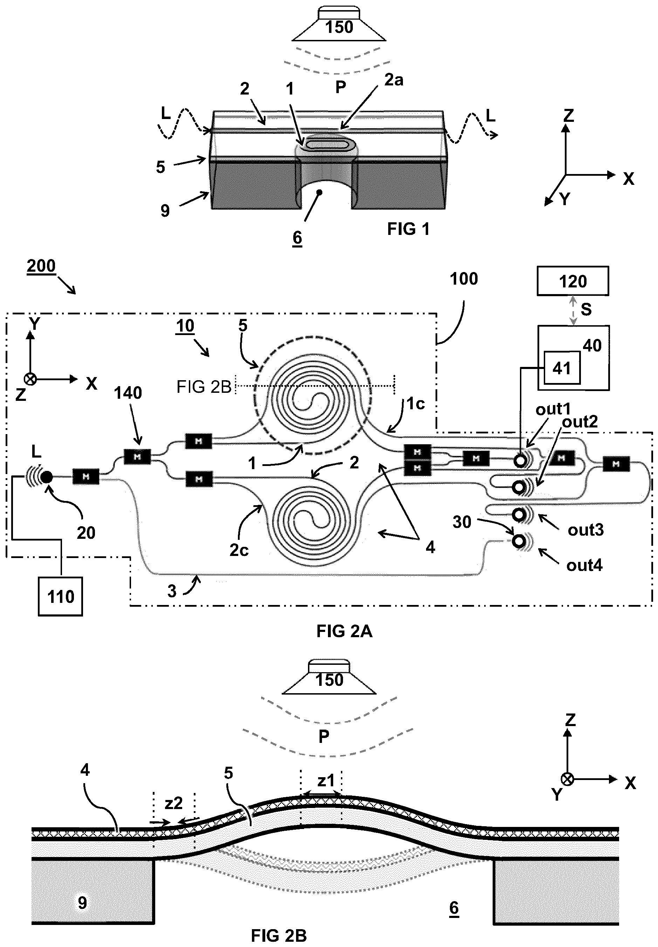

FIG 1 illustrates an ultrasound receiver concept redrawn from a publication by S.M. Leinders, et al in Nature Scientific Reports, 14328, (2015). The receiver comprises a carrier substrate 9 and a membrane layer 5. The membrane spans across an aperture 6 in the substrate. The membrane deflects in response to an acoustic pressure wave (P). The mechanical resonance frequency of the membrane is matched to the frequency of the ultrasound signal as emitted by emitter 150.

In addition the device comprises a pair of optical waveguides. In the embodiment as shown the waveguides including a primary waveguide 1 embodied as a ring resonator and an auxiliary waveguide 2 including a coupling section 2a. Alternatively, the waveguide can be embodied as an interferometer. For example, a Mach Zehnder configuration as illustrated in 2A and 3A. For interferometers the waveguide structure 4 typically also includes at least a primary waveguide 1 and an auxiliary waveguide 2, whereby the primary waveguide 1 (also referred to as sensing waveguide) extends along the membrane and the auxiliary waveguide 2 (typically not at the membrane) is referred to as a reference waveguide.

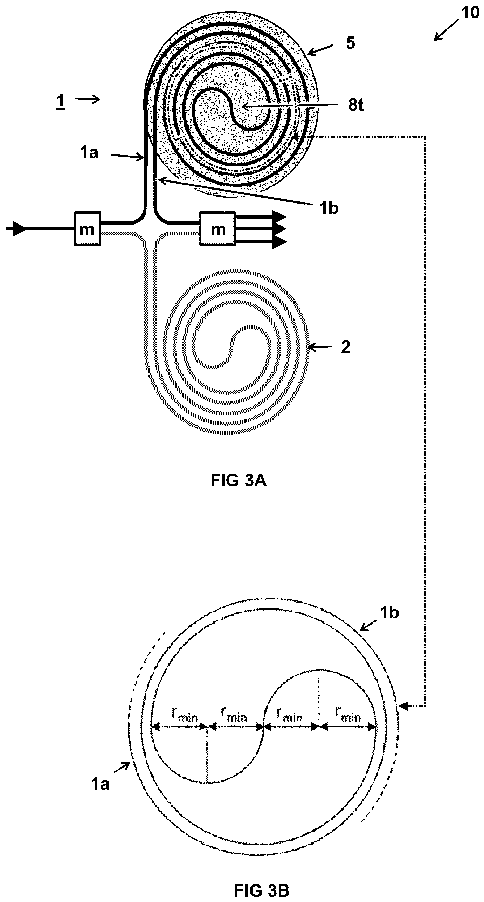

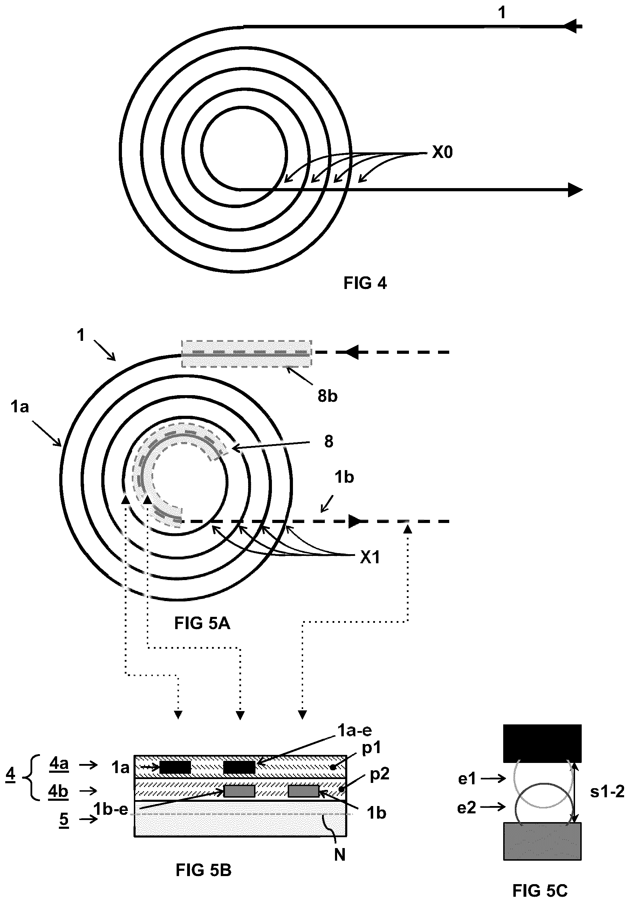

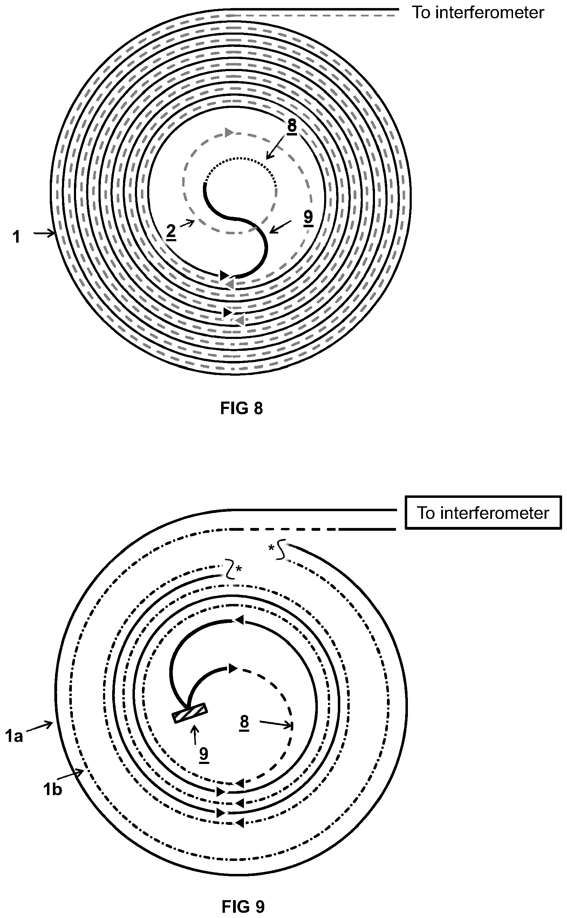

To increase a response the sensing waveguide 1 can be provided as a double spiral, e.g. as shown in FIGs 2A and 3A. In order to avoid waveguide crossings (which would lead to spurious reflections, cf. in-plane crossings X0 and out-of-plane crossings X1 in FIGs 4 and 5A) the waveguide makes a 180 degree turn (see e.g. Figure 3A, 3B, and 8). As such spiral can conceptually be interpreted as including a first waveguide portion 1a and a second waveguide portion 1b that are interconnected at a coupler element 8t and that combinedly provide a light path extending between an input 20 and an output 30 (see e.g. FIG 2A).

As illustrated in FIG 3A and in more detail in FIG 3B, the waveguide turn 8t occupies a large area of the membrane due to the minimum bending radius ($r_{min}$) of the waveguide, below which optical losses within the waveguide rapidly increase. This large area does not add to sensitivity, and sets a limit to the minimum membrane size and therefore to the maximum mechanical resonance frequency. Inventors found that sensitivity can be increased by reducing the empty central area as much as possible. A possible solution can be the use of waveguides which have a small minimum bending radius. However, small bending radii require high-contrast waveguides such as silicon on insulator, which have relatively high losses (> 1 dB/cm), which limits an overall length of the spiral for high sensitivity, and/or cascades of spirals for further improved sensitivity. Similarly a dimension of the waveguide is restricted by the intended operating frequency for a given microfabrication platform, already since the resonance frequency of a membrane scales approximately according to 1/diameter$^2$.

FIGs 2A and 2B provide a top view image and a partial cross-section side view of an ultrasound imager assembly 200 according to the present disclosure. The imager assembly 200 includes a receiver device 100, an on-chip transducer element 10, and one or more of a light source 110, a readout circuitry 40, and a processing unit 120. The ultrasound imager assembly 200 can also include one or more ultrasound transmitter 150 (see figure 2B).

The transducer element comprises at least a membrane 5 extending over an aperture 6 in a surface of a carrier substrate 9 and a waveguide layer structure 4 disposed at the membrane. Preferably, the membrane 5 is configured to have a resonance mode (typically a fundamental resonance mode) within a frequency range of the emitter for a desired medium to be imaged (e.g.

water, tissue).

The waveguide layer structure 4 comprises at least a primary waveguide 1 providing a light path extending between an input 20 and an output 30. The waveguide comprises at least a first waveguide portion 1a, a second waveguide portion 1b, and a waveguide coupler 8 disposed between the first and the second waveguide portions. The device further comprises a reference waveguide layer structure 2 disposed outside the membrane.

Note that, for ease of understanding, the primary and reference waveguide are depicted as spirals having a 180 degree turn at the center. Details as to the first waveguide portion 1a, the second waveguide portion 1b, and the waveguide coupler 8 disposed between the first and the second waveguide portions will be explained in further detail with reference to FIGs 5 to 16. Also, it will be appreciated that, unless stated to the contrary, concepts as discussed are not limited to specific configurations as shown. For example, where effects are described in relation to MZI having three output ports as shown, the concepts can be applied in more generically. For example, the waveguide configurations as shown can also be applied to N-port interferometers, where N is an integer number (typically 2, 3 or 4).

In some embodiments, e.g. as shown the receiver device further comprises one or more of: a single loop sensing waveguide 1c disposed at the membrane and a corresponding reference waveguide 2c; and a power reference waveguide 3, which also extends between the input 20 and a respective output 30. A plurality of waveguide couplers/splitters 140, as known in the field, are provided to interconnect the respective waveguides. In a preferred embodiment, the couplers/splitters are embodied as an on-chip multi-mode interference couplers (MMI, indicated with 'M' in the figure).

The readout circuitry 40 is configured to provide, as electrical signals, an output (S) based on a detected light intensity and/or phase shift. The processing unit 120 is configured for processing the output. The readout circuitry 40 includes light sensors 41 (only one indicated for clarity) operably connected to the one or more output 30 and configured to provide as, electrical signals, an output (S) based on a detected light intensity and/or phase shift. In the embodiments as shown light output 1 and 2 (out 1 and 2) correspond to a phase difference interference between spiraling waveguides 1 and 2. Light output 3 (out 3) corresponds to the output of the single loop waveguides 1c and 2c and output 4 (out 4) corresponds to a power tap output and can be used to optimize a power output of light source 110.

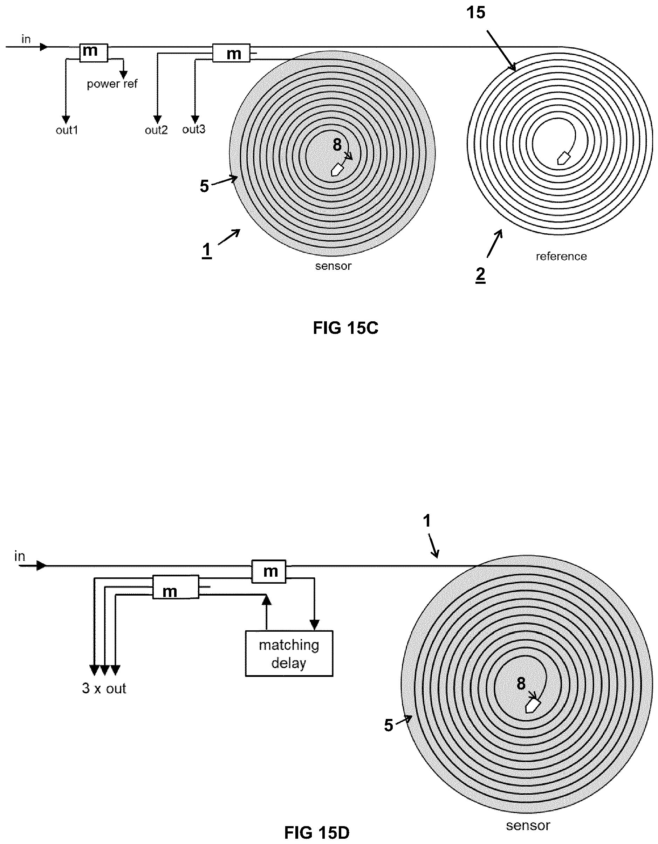

Of course many alternative configurations are possible. For example, figure 3A illustrates an alternate configuration having only a dual spiraling sensing arm and reference arm. FIGs 15C and 15D illustrate yet further interferometry based embodiments that comprise a single loop sensing waveguide 5.

The input, output(s), and the couplers 140 can be on-chip elements that form part of an on-chip integrated ultrasound imager assembly 200. Optionally one or more of the light source (e.g. an LED/laser), the read out electronics 200, and even the processing unit 120, can be integrated as well. Alternatively, or in addition, one or more of the light source, and the read out electronics 200, can be separate elements (part) configured to be coupled to the transducer element 10, e.g. via respective optical fiber, electronic wiring.

As best seen in the partial side view in FIG 2B the waveguide layer structure 4 can be provided on top of the membrane. Alternatively or in addition the waveguide layer can be provided below the membrane (e.g. between the substrate and the membrane). Optionally some or all of the waveguide can be provided as part of the membrane (e.g. within an etched track).

During operation, and depending on a position of the waveguide with respect to the membrane, the optical path length of the waveguides changes in response to a received acoustic pressure wave (P). See e.g. indicated zones z1 and z2 in Fig. 2B respectively experiencing extension and compression during an upward (+z) membrane displacement as drawn (and vice versa during downward (-z) membrane displacement as drawn) for a straight waveguide passing through the center of the membrane.

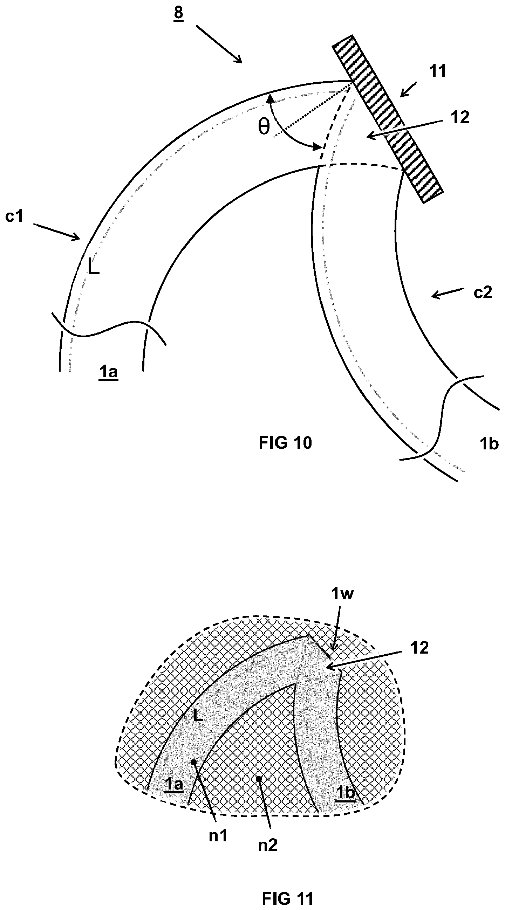

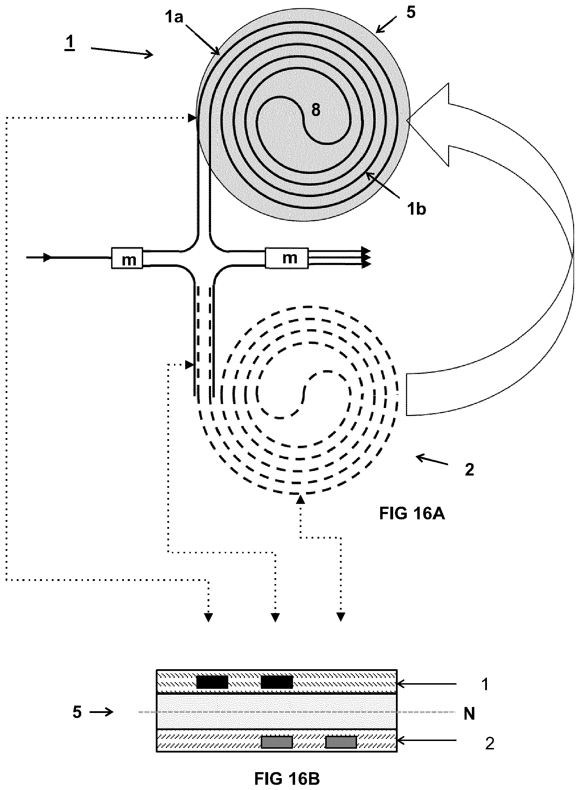

In some embodiments the waveguide layer structure 4 can be a single layer. In some preferred embodiments, the waveguide layer structure 4 can be a multi-layer structure e.g. a dual layer structure. In yet other or further embodiments respective one of the waveguide layer structure can be provided on either side of the membrane. Details as to configurations comprising a single layer waveguide layer structure 4 are described in further detail with reference to FIGs 10-15. Details as to configurations wherein the waveguide layer is a multi-layer structure (multi-layer stack) will be described in further detail with reference to FIGs 5-9. Details as to configurations wherein respective ones of the waveguide layer structure are provided on opposing sides of the membrane are described with reference to FIG 16.

Referring to FIG 3 a transducer element 10 is illustrated having a sensing and reference waveguide according to a known interferometric configuration. As shown both the sensing waveguide 1 (extending along membrane 5) and the reference waveguide 2 (extending outside the membrane) follow a spiraling path having a waveguide turn (inflection point). In terms of the present disclosure both waveguides can be interpreted as comprising a first waveguide portion 1a and a second waveguide portion 1b that are interconnected by a smooth S-shaped coupler (8t), which disadvantageously takes up a large fraction of the available surface area along membrane 5.

In general terms the configurations according to the present disclosure mitigates disadvantages arising from the known configuration by providing an improved coupling between the respective waveguide portions.

As will be clear from the description herein the provided coupling (be it a merged interconnect and/or vertical coupler) enables a more dense coverage of the membrane, and/or the use of smaller membranes for a given minimum waveguide bend radius, thus allowing higher membrane resonance frequencies. Among others this advantageously increases sensitivity. In some preferred embodiments, the S-shaped coupler can be entirely dispensed with while realizing an at least comparable or even increased overall length of the waveguide along a given membrane. In addition, the present disclosure realizes beneficial waveguide routing along the membrane without in plane waveguide crossings (cf FIG 4 illustrating a configuration without S-shaped coupler but including a number of in-plane crossings X0 equal to a number of full turns within the spiral). These crossings introduce loss, and more importantly, introduce a fine structure on the wavelength response due to residual reflections at these crossings.

FIGs 5A, 5B and 5C provide schematic views of a transducer element including a vertical coupler 8. As shown, and in contrast to a S-shaped bend, the vertical coupler 8 makes use of two waveguide layers 4a, 4b instead of one. As best seen in in FIG 5A (top view) and 5B (partial cross-section side view) waveguide 1 is comprised of two interconnected waveguide sections 1a and 1b that combinedly provide a continuous light path.

As shown the first waveguide portion 1a is comprised in a first sublayer 4a of the waveguide layer structure 4 and the second waveguide portion 1b is comprised in a second sublayer 4b of the waveguide layer structure 4. The coupler 8 is a vertical waveguide coupler. The waveguide coupler 8 is comprised of overlapping end sections 1a-e and 1b-e of the first and the second waveguide portion. As shown, the end sections co-propagate with respect to each other forming an overlap in a plane view (perpendicular to the waveguide layer structure) thereby optically coupling the first and the second waveguide (see Fig 5C). Inventors found that the vertical coupler allows light to be coupled from one layer to the other with negligible loss. Without wishing to be bound by theory the realized coupling is believed to relate to overlapping evanescent fields (e1,e2, see FIG 5C) along the overlap.

The respective waveguides can be coated by a cladding (p1, p2). The cladding can e.g. be a polymer. The cladding can advantageously protect the waveguides from physical and/or chemical contact/damage. In addition the cladding can advantageously increase a bandwidth (reduce Q-factor) and/or adjust a resonance frequency of the membrane by adjusting an overall weight and/or effective stiffness of the resonator.

Alternatively, or in addition, the cladding can be shaped. For example, the cladding can be restricted on top of the membrane, but not next to the membrane (beside the aperture/recess). Alternatively, or in addition, the cladding may cover only selected parts of the membrane, leading to locally stiff zones on the membrane (with cladding) and locally less stiff zones (without cladding). Waveguides are preferably located in the less stiff zones for enhanced sensitivity ('bossed membrane'). Alternatively, or in addition, cladding could be at areas surrounding aperture/recess (i.e. not on the membrane). This effectively changes the clamping of the membrane, giving a different trade-off between changing the Q and reducing/increasing the peak displacement of the membrane as a result of the incoming pressure wave.

A separation distance (s1-2), e.g. as determined by a thickness of one or more of the cladding, as well as an overlap length can be determined by routine experimentation and/or dedicated software for waveguide calculations. Note that cross-talk between the two waveguides at positions of out-of plane crossings (indicated X1 in FIG 5A) was found to be negligible due to the comparatively shorter overlap and/or non-matching orientation at the crossing.

Preferably, the spiral portion is provided in the waveguide layer furthest away from a neutral bending plane N of the combined stack of membrane and waveguide layer structure 4.

A second vertical coupler 8b can be provided. The second coupler can direct all interconnecting waveguides in a single layer. This eases interconnecting the waveguide portions to a waveguide couplers/splitter 140 and/or to an input/output.

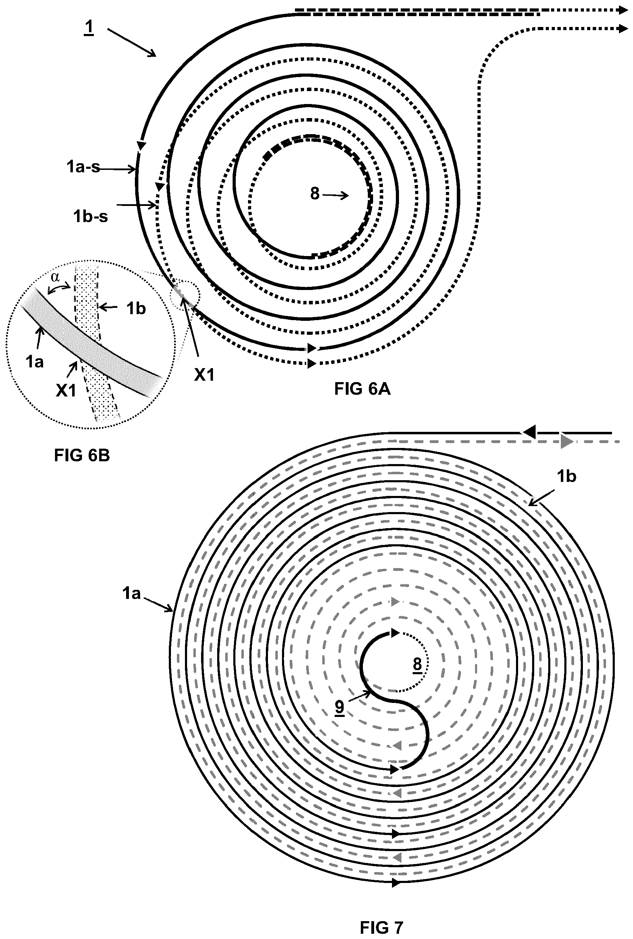

In a preferred embodiment, e.g. as shown in FIGs 6-9, the first and the second waveguide portion 1a, 1b form a first and a second spiral portion (1a-s, 1b-s). As compared to embodiments shown in FIG 5, dual spiral configurations further increase on overall length of the lightpath at the membrane.

Note that an interspacing between adjacent spiral portions in configurations in which the spiral portions are disposed in vertically separated layers can, in view of the additional vertical separation, be smaller as compared (as seen in plan view) to single layer configurations wherein the forward and return branches of the spiral are positioned in a direct side by side relationship at the same level.

The coupler 8 can be a vertical coupler as described herein. In addition to the advantages described in relation to FIG 4 the second spiral adds to the sensitivity.

In some embodiments, e.g. as shown in FIG 6A, the first and the second spiral 1a-s,1b-s co-propagate about the coupler. As for the configuration described in relation to FIG 5 cross-talk at overlapping crossings X1 between the first and the second waveguide portion can be minimal. Crosstalk was found to be particularly negligible provided that, at the crossings, an angle between the first and the second spiral portion at each of the number of crossings (X) is larger than a minimal value. The exact value can depend on the exact layer stack and can be determined by routine experimentation and/or dedicated software for waveguide calculations. In an example the angle ($\alpha$) is no less than 30 degrees.

In another embodiment the first and the second spiral 1a-s,1b-s counter propagate about the coupler, at least for a substantial portion of the overall trajectory at the membrane. Counter propagating configurations can provide a benefit of further reducing or even eliminating crossings between the two spiraling waveguide sections.

A counter propagation configuration, e.g. as shown in FIG 7 and FIG8 can be realized by including chirality inversion section. In some embodiments the chirality inversion section 9 be realized as an S-shaped connector.

In a preferred embodiment, e.g. as shown in FIG 7 and 8, the waveguide layer structure 4 again comprises two sub layers. The first spiraling waveguide portion 1a and a second spiraling waveguide portion 1b (in separate layers) are connected by a vertical waveguide coupler 8 (indicated by a dotted line). Adjacent the waveguide coupler 8 one of the layers comprises a chirality inversion section 9 (indicated as an S-shaped section). The chirality inversion section 9 changes a chirality of the first waveguide portion 1a. At the same time the second waveguide portion 1b spirals under the chirality inversion section 9. Introduction of the chirality inversion section 9 advantageously realizes a dual spiraling configuration whereby the number of crossings can be less than a number of full revolutions about the center (e.g. as shown in FIGs 8 and 9).

In a variation the number of vertical crossings between the waveguide portions can be reduced, down to as low as one crossing or even zero crossings, by reducing the number of turns passing under the chirality inversion section 9.

Reducing a number of crossings by realizing a counter propagating configuration can be particularly advantageous for specific waveguide configurations in which it may be difficult to reduce the reflections at the crossings to a sufficient level, even though the two waveguides are not in the same layer. Similar as for the co-propagating configuration the counter propagating configuration was found to improve sensitivity, though one or both of the waveguide layers can have a relatively large empty footprint at the center.

To reduce the empty footprint a different inversion, also described herein as merged interconnect, can be provided. Details of the merged interconnect and variations of the transducer element 10 comprising a merged interconnect will be described with reference to FIGs 9-15.

Figure 9 illustrates an embodiment of a transducer element 10, wherein the waveguide further comprises a chirality inversion section 9, said chirality inversion section disposed between the waveguide coupler 8 and one of the first and the second waveguide portion (1a, 1b), so that the first and the second waveguide portion counter propagate about the chirality inversion section.

In a particularly preferred variation the chirality inversion section 9 is embodied as a merged interconnect 12 (see e.g. FIG 10). The merged interconnect typically comprises a first curved waveguide section c1 and a second curved waveguide section c2, wherein the first curved waveguide section c1 continues into the second curved waveguide section under an abrupt angle θ forming a merged interconnect. The interconnect terminates at a mirror element 11 configured to reflect light L traveling along one of the first and the second section to the other.

With reference to FIG 10 the concept is described in more detail. Instead of two half-circles (S-shaped portion), the light is redirected by means of a mirror. Two bent waveguides are terminated at the mirror with a mutual angle. If the condition of total internal reflection is satisfied the reflection can be essentially lossless. In practice, some optical loss can occur, e.g. due to a roughness at mirror or an off-vertical positioning and/or poor definition of the waveguide at the overlap (indicated by dashed lines). Note that the center of gravity of a light wave propagating in a curving waveguides tends to be near to the outer bend as opposed to the inner bend (indicated by the double dot-dashed line).

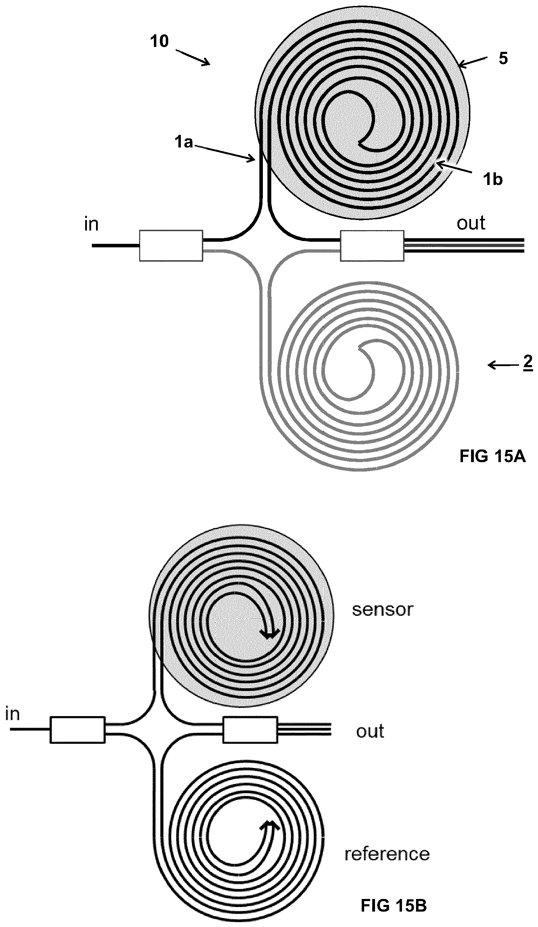

As illustrated in e.g. FIGs 9 and 15A the merged interconnect can occupy considerable less surface as compared to an S-shaped interconnect (double half-circle).

In some preferred embodiments, e.g. as shown with reference to FIGs 10, and as applied in the embodiment shown in 15A, there is provided a transducer element 10 for converting an acoustic pressure wave P into a modulation of a property of light L, wherein the transducer element 10 comprises: a membrane 5 extending over an aperture or recess in a surface of the carrier substrate; a waveguide layer structure disposed at the membrane, the waveguide layer structure comprising a waveguide 1 providing a light path extending between an input and an output, the waveguide comprising: a first curved waveguide section 1a,c1, a second curved waveguide section 1b,c2, and wherein the first curved waveguide section continues into the second curved waveguide section under an abrupt angle θ forming a merged interconnect 12, the interconnect terminating at a mirror element 11 configured to reflect light traveling along one of the first and the second section to the other

In a preferred embodiment, e.g. as shown in FIG 11, the mirror element is an upstanding sidewall 1w of the waveguide. The angle (θ) is larger than two times a critical angle of incidence for total internal reflection (TIR).

$$\sin\frac{\varphi}{2} = \frac{n_{ambient}}{n_{eff}}$$

As indication, for waveguides formed of a material having a refractive index (n1) of about 3.8 and a cladding with a refractive index (n2) of about 1.6 (e.g. polymers), an angle θ between the respective waveguides can be ≥ than about 60°. Very steep angles, e.g. 20°, can be less preferred because this would increase a dimension of the overlap. Alternatively or in addition, the mirror element may be a sidewall of the waveguide having reflective coating (e.g. metal).

Similar as for the vertical interconnect the merged interconnect is preferably provided at a central position of the membrane. Accordingly, in some variations both the first waveguide section and the second waveguide section, each comprises a spiral portion, such as a spiral represented by an Archimedean spiral, an involute of a circle, or a Fermat's spiral.

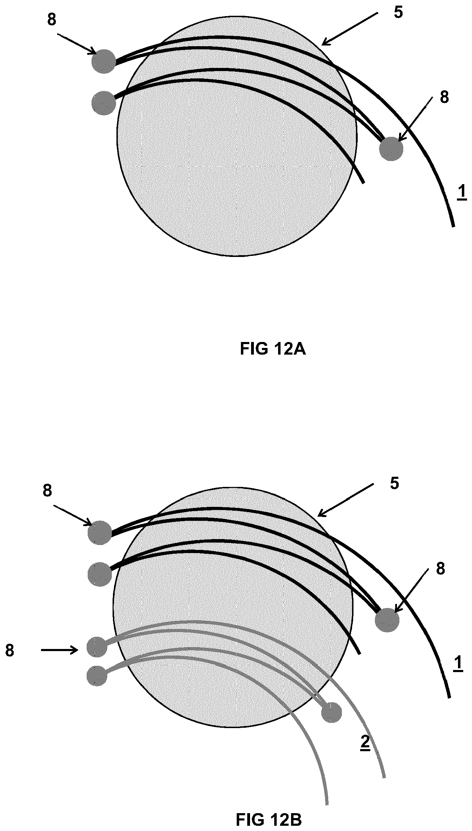

In some embodiments however the one or more of the sensing and reference waveguide can follow an alternate, non-spiraling, trajectory, while still benefitting from a comparatively larger spatial coverage. FIG 12A illustrates an embodiment wherein the primary waveguide follows a zig-zag trajectory across the membrane. Optionally the reference waveguide 2 may also follow a zig-zag trajectory, e.g. as indicated in FIG 12B. By appropriate design of the trajectories, the sensing waveguide 1 and the reference waveguide 2 can have opposite response to membrane deformation, so that in an interferometric concept the sensitivity is doubled. An additional feature of this particular embodiment is that the membrane radius may be smaller than the minimum radius of curvature of the waveguide, enabling small membranes and therefore high acoustic frequencies.

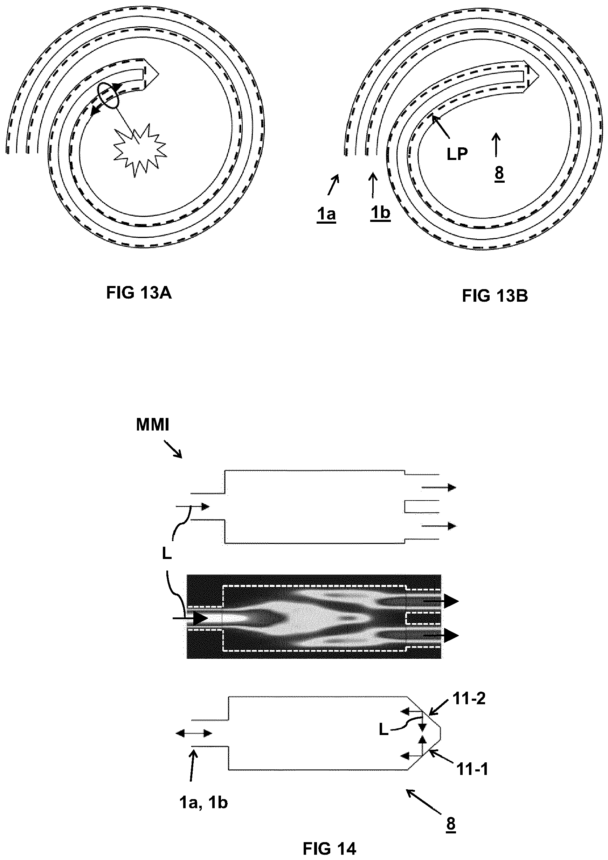

An alternative approach to a merged interconnect using a single mirror element is to interconnect the respective waveguides using a plurality of mirror elements. For example, the merged interconnect can comprise two mirror elements, such that the reflection is now distributed over two mirrors. For example, in some embodiments e.g. as shown in FIGs 13A, 13B, and 14 , the merged interconnect comprises two upstanding mirror elements combinedly configured to reflect light traveling along one of the first and the second light path portion to the other. An advantage is that the two reflections can be at 45°, resulting in little overlap of waveguides with associated diffraction loss, and that the condition of total internal reflection is easily satisfied even if the waveguides and mirrors are embedded in a higher-index material which reduces the index contrast.

In some embodiments, e.g. a indicated in FIG 13, the interconnect can be regarded as a prism element, e.g. a prism-shaped overlap. As before the mirror elements may be an upstanding side wall of the waveguide at the merge. FIG 15B illustrates an embodiment of a transducer element 10 that primarily differs from the embodiment shown in FIG 15A in that the a merged interconnect is based on a dual mirror overlap.

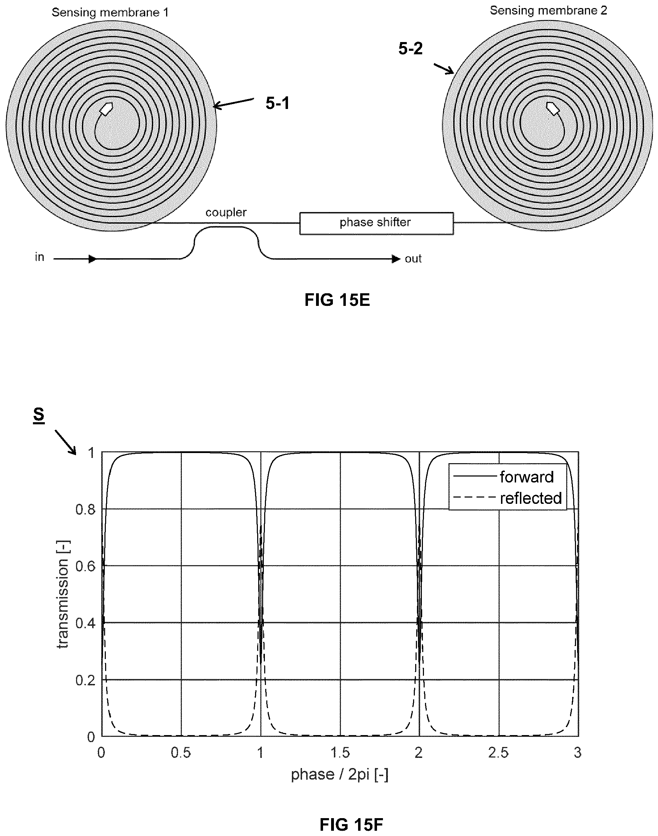

Alternatively the waveguide coupler 8 can be provided as by means of Multi-Mode Interference couplers (FIG 14). In an MMI, a single-mode waveguide connects to a multi-mode waveguide section, and excites higher-order modes. These modes propagate all at a different speed, creating an interference pattern which exhibits N-fold images of the input waveguide intensity pattern. In the center image in Figure 14 the multi-mode waveguide length is chosen such that the device operates as a 1 × 2 splitter. The light from each output can be directed to the other output in a compact way by incorporating TIR mirrors as shown in the lowest graphic in Figure 14. This device acts as a highly compact and efficient mirror. Figs 15C, 15D and 15E illustrate embodiments of a transducer element 10 wherein the waveguide coupler 8 (for both the sensing and the reference waveguide 1,2) are provided by a MMI coupler. Note that the forward and backward spiraling portions (cf portion 1a and 1b in FIG 9) overlap completely, forming a single spiraling waveguide that ends at the MMI element. FIG 15F depicts an illustrative transmission of the Fabry-Perot type interferometer as shown in FIG 15E as a function of the round-trip phase.

In some embodiments, particularly for embodiments described in relation to FIGs 13B, 15B, 14, and 15C-E, it is preferred that the waveguides feature a bend-to-straight transition, which can be implemented fairly compact by means of Euler bends. As compared to variations having curved sections at the interconnect the preferred variation reduces losses due to a transition of optical mode propagation at an outer edge of the waveguide (indicated by the dashed line) to, after reflection, end up at the inner edge of the waveguide. As indicated in FIG 13B embodiments wherein the first and the second waveguide section each comprise a section having a radius of curvature that progressively increases toward the coupler element, preferably ending at an essentially straight section at the coupler, the mode propagates comparatively more at the center of the waveguides. As a result the reflection can be more effective. Note that for variations based on an MMI coupler it can be equally preferred to include a section having a radius of curvature that progressively increases toward the coupler element (see e.g. Figs 15C and 15D).

In order to implement the MMI TIR mirror in an MZI, the MZI is implemented in a reflective layout, rather than in a transmissive layout. Reflective configurations are shown in FIG 15C and 15D, with the TIR mirror indicated in the centre of the spiral. Note that it is recommended to first increase the bending radius in the centre (for example using an Euler bend) so that the input waveguide of the MMI is straight. This generally results in higher efficiency. Even so, the centre of the spiral is highly compact, as 1x2 splitters can be very small. In reflective configuration, the back-reflected port is tapped by means of a 1x2 splitter, causing a power reduction of a factor 2 in one of the three channels. In some configurations, e.g. as shown in FIG 15D. the matching delay is similar to a regular spiral with looped bends. Since this is the reference there is no need to make it extremely small. The 2x2 splitter in Figure 15D results in a power imbalance which does not have serious consequences but can be mitigated by means of an additional 50% tap in the matching delay.

FIG 16A and 16B illustrate aspects of a double-sided transducer element. As indicated in FIG 16A by the larger arrow (and as better seen in cross section view in FIG 16B) the primary waveguide 1 and reference waveguide 2 are disposed in separate layers at opposing sides of the membrane 5. In the embodiment as shown the first and second waveguide portions 1a,1b for both the primary and reference waveguide 1,2 are interconnected by an S-shaped interconnect. It will be appreciated that, in line with the present disclosure, interconnect 8 can be embodied as a merged interconnect as disclosed herein.

For the purpose of clarity and a concise description, features are described herein as part of the same or separate embodiments, however, it will be appreciated that the scope of the invention may include embodiments having combinations of all or some of the features described. For example, while embodiments were shown for MZI interferometers, also alternative ways may be envisaged by those skilled in the art having the benefit of the present disclosure for achieving a similar function and result. Of course, it is to be appreciated that any one of the above embodiments may be combined with one or more other embodiments or processes to provide even further improvements in finding and matching designs and advantages. While various embodiments were illustrated using circular fully clamped membranes it will be appreciated that the invention can also be worked for different membranes, e.g. membranes having a different shape, such as square, rectangular or elliptical membranes. Alternatively, or in addition, the membrane may be only partially connected around its perimeter to the carrier, e.g. double- or single clamped beams.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

**Claims**

1.  On-chip opto-acoustic transducer element (10) for converting an acoustic pressure wave (P) into a modulation of a property of light (L), the transducer element comprising:

a membrane (5) extending over an aperture (6) or recess in a surface of a carrier substrate (9); a waveguide layer structure (4) disposed at the membrane, the waveguide layer structure comprising a waveguide (1) providing a light path extending between an input (20) and an output (30), the waveguide comprising:

a first waveguide portion (1a), a second waveguide portion (1b), and a waveguide coupler (8) disposed between the first and the second waveguide portions, wherein

the first waveguide portion (1a) is comprised in a first sublayer (4a) of the waveguide layer structure and the second waveguide portion is comprised in a second sublayer (4b) of the waveguide layer structure, and wherein the coupler comprises a section of the first waveguide portion (1a) and a section of the second waveguide portion (1b), whereby the sections co-propagate with respect to each other forming an overlap thereby optically coupling the first and the second waveguide portion.

2. The transducer element according to claim 1, wherein the first waveguide portion provides a forward portion of the light path from the input towards the coupler, wherein the second waveguide portion provides a return portion of the light path from the coupler towards the output, and wherein first sublayer and the second sublayer are disposed on a same side of the membrane (5).

3. The transducer element according to any of claim 1 - 2, wherein the first and the second waveguide portion (1a, 1b) form a first and a second spiral portion (1a-s, 1b-s) that respectively spiral about the waveguide coupler (8) .

4. The transducer element according to any of the preceding claims, wherein the waveguide (1) further comprises a chirality inversion section (9), said chirality inversion section disposed between the waveguide coupler (8) and one of the first and the second waveguide portion (1a, 1b), so that the first and the second waveguide portion counter propagate about the chirality inversion section.

5. The transducer element according to claim 4, wherein the chirality inversion section (9) comprises a first curved waveguide section (1c) and a second curved waveguide section (2c), wherein the first curved waveguide section (1c) continues into the second curved waveguide section (2c) under an abrupt angle (θ) forming a merged interconnect (12), the interconnect terminating at a mirror element (11) configured to reflect light (L) traveling along one of the first and the second section to the other, wherein the mirror element is an upstanding sidewall (1w) of the waveguide, and wherein the angle (θ) is larger than two times a critical angle of incidence (θc) for total internal reflection.

6. An on-chip opto-acoustic transducer element (10) for converting an acoustic pressure wave (P) into a modulation of a property of light (L), the transducer element (10) comprising:

a membrane (5) extending over an aperture (6) or recess in a surface of the carrier substrate (9); a waveguide layer structure (4) disposed at the membrane, the waveguide layer structure comprising a waveguide (1) providing a light path extending between an input (20) and an output (30), the waveguide comprising:

a first curved waveguide section (1c), a second curved waveguide section (2c), and wherein an end of the first curved waveguide section continues into an end of the second curved waveguide section under an abrupt angle (θ) forming a merged interconnect (12), the interconnect terminating at a mirror element (11) configured to reflect light traveling along one of the first and the second section to the other.

7. The transducer element (10) according to claim 5 or according to claim 6, wherein the mirror element (11) is an upstanding sidewall (1w) of the waveguide and wherein the angle (θ) is larger than two times a critical angle of incidence (θc) for total internal reflection.

8. The transducer element according to any of the preceding claims 5 - 7, wherein the merged interconnect is provided at a central position of the membrane, and wherein both the first waveguide section and the second waveguide section, each comprise a spiral portion.

9. The transducer element according to any of the preceding claims 5 - 7, wherein the waveguide layer comprises a plurality of: the first curved waveguide section, the second curved waveguide section, and the merged interconnect, wherein the first waveguide section and the second waveguide section have a radius of curvature > a radius of curvature of the membrane, and whereby individual ones of the plurality of merged interconnects are provided alternatingly across opposing ends of the aperture or recess to interconnect respective ones of the plurality of the first waveguide section and the second waveguide section in a zig-zag fashion.

10. The transducer element according to claim 8, wherein the spiral portions of the first and the second waveguide section co-propagate along the membrane with the same handedness and wherein the number of overlaps (X1) between the spiral portions is less than a number of full revolutions about the merged interconnect, preferably whereby wherein an angle between the first and the second spiral at each of the overlaps (X1) is no less than 30 degrees.

11. The transducer element according to any of claims 5 - 10, wherein the merged interconnect comprising at least two upstanding mirror elements, preferably is a prism element, combinedly configured to reflect light traveling along one of the first and the second light path portion to the other.

12. The transducer element according to claim 11, wherein the first and the second curved waveguide section are a single curved waveguide section and whereby the merged interconnect is a multimode interference reflector, the multimode interference reflector comprising the at least two upstanding mirror elements at a terminal end combinedly configured to reflect light traveling from single curved waveguide section back into the single curved waveguide section.

13. The sensor element according to any of the preceding claims, wherein at least the waveguide (1) is cladded by a polymer.

14. The transducer element according to any of the preceding claims, further comprising a reference waveguide layer structure (2) extending at least in part along a second side of the membrane opposite the first side across a natural bending plane (N) of the membrane.

15. An ultrasound imager assembly (200) comprising:

the on-chip transducer element (10) to any of claims 1 - 14,
an ultrasound transmitter (150)
a light source (110) operably configured for injecting light into the input (20),
readout circuitry (40) including: one or more light detector (41) operably connected to the one or more output (30) and configured to provide as, electrical signals, an output (S) based on a detected light intensity and/or phase shift; a processing unit (120) configured for processing the output.

**FIG 1**

**FIG 2A**

**FIG 2B**

FIG 3A

FIG 3B

FIG 4

FIG 5A

FIG 5B

FIG 5C

FIG 6A

FIG 6B

FIG 7

To interferometer

**1** →

**8**

**2**

**9**

**FIG 8**

To interferometer

**1a** →

**1b** →

**8**

**9**

**FIG 9**

FIG 10

FIG 11

FIG 12A

FIG 12B

**FIG 13A**

**FIG 13B**

LP

1a    1b    8

MMI

L

1a, 1b

11-2

L

11-1

8

**FIG 14**

FIG 15A

FIG 15B

**FIG 15C**

**FIG 15D**

Sensing membrane 1

Sensing membrane 2

**5-2**

**5-1**

coupler

phase shifter

in → → out

**FIG 15E**

**S**

forward
reflected

transmission [-]

phase / 2pi [-]

**FIG 15F**

**FIG 16A**

**FIG 16B**

Europäisches
Patentamt

European
Patent Office

Office européen
des brevets

# EUROPEAN SEARCH REPORT

**Application Number**

EP 23 18 4252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 851 815 A1 (TNO [NL]) 21 July 2021 (2021-07-21) | 1,2 | INV. G01H9/00 |
| A | * paragraph [0006] * <br> * paragraph [0038] * <br> * figures 1c,d * | 3-15 | G02B6/125 |
| Y | US 7 587 105 B2 (UNIV MICHIGAN [US]) 8 September 2009 (2009-09-08) <br> * column 6, paragraph "Microring Photonic Resonators" * <br> * figure 1 * | 1,2 | |
| A | US 2023/059011 A1 (HARMSMA PETER JOHAN [NL] ET AL) 23 February 2023 (2023-02-23) <br> * paragraph [0225] - paragraph [0234] * <br> * figures 15,16 * | 1-15 | |

**TECHNICAL FIELDS SEARCHED (IPC)**

G01H
A61B
G02B

The present search report has been drawn up for all claims

| Place of search | Date of completion of the search | Examiner |
|---|---|---|
| The Hague | 15 December 2023 | Hippchen, Sabine |

EPO FORM 1503 03.82 (P04C01)

2

## ANNEX TO THE EUROPEAN SEARCH REPORT
## ON EUROPEAN PATENT APPLICATION NO.

EP 23 18 4252

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2023

| Patent document cited in search report | | Publication date | Patent family member(s) | | Publication date |
|---|---|---|---|---|---|
| EP 3851815 | A1 | 21-07-2021 | NONE | | |
| US 7587105 | B2 | 08-09-2009 | US | 2008095490 A1 | 24-04-2008 |
| | | | WO | 2007018552 A2 | 15-02-2007 |
| US 2023059011 | A1 | 23-02-2023 | EP | 3851886 A1 | 21-07-2021 |
| | | | EP | 4091006 A1 | 23-11-2022 |
| | | | US | 2023059011 A1 | 23-02-2023 |
| | | | WO | 2021145768 A1 | 22-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022053712 A1
- US 11320303 B2
- WO 2021145766 A1

**Non-patent literature cited in the description**

- **S.M. LEINDERS et al.** *Nature Scientific Reports*, 2015, 14328